# EUROPÄISCHE PATENTSCHRIFT

(11) **EP 1 567 973 B1**
(45) Veröffentlichungstag und Bekanntmachung des Hinweises auf die Patenterteilung: **17.05.2006**
(21) Anmeldenummer: 03767414.0
(22) Anmeldetag: 10.11.2003
(51) Int. Cl.: G06K 13/08

(54) **CHIPKARTENAUFNAHME**
CHIPCARD HOUSING
ELEMENT DE RECEPTION POUR CARTE A PUCE

(30) Priorität: 04.12.2002 DE 10256716
(43) Veröffentlichungstag der Anmeldung: 31.08.2005
(73) Patentinhaber: SIEMENS AKTIENGESELLSCHAFT, 80333 München (DE)
(72) Erfinder: HUG, Klaus, 78727 Oberndorf (DE); RIESTER, Thomas, 78052 Villingen-Schwenningen (DE); WAHLER, Torsten, 78073 Bad Dürrheim (DE)
(86) Internationale Anmeldenummer: PCT/DE2003/003718
(87) Internationale Veröffentlichungsnummer: WO 2004/051556

(56) Entgegenhaltungen:
- DE-A- 10 112 061
- DE-A- 19 809 619
- DE-A- 19 815 549
- DE-C- 19 947 162
- US-A- 4 800 551

## Beschreibung

Die Erfindung betrifft eine Chipkartenaufnahme, mit einem ersten Zentralteil, das über einen Antrieb verschoben werden kann, und einem zweiten Zentralteil, das Mitnahmeelemente aufweist, die einen Anschlag für eine Chipkarte bilden und über die bei einer Auswurfbewegung die Chipkarte mitgenommen wird, um sie ausgehend von einer ersten Arbeitsposition, in der eine Chipkarte vollständig aufgenommen ist, aus der Chipkartenaufnahme zu befördern.

Ein solches Gerät ist beispielsweise ein digitaler Fahrtenschreiber, bei dem zur Identifizierung des Fahrers bzw. zur Speicherung von fahrer- und fahrzeugspezifischen Daten Chipkarten verwendet werden. Diese werden in den digitalen Fahrtenschreiber eingesteckt und in der eingesteckten Position verriegelt. Während der Aufzeichnung bzw. Benutzung des Fahrzeuges darf die Karte unter keinen Umständen willkürlich von außen entnommen oder aus dem Gerät ausgeworfen werden, sondern nur unter vom Gerät gesteuerten bestimmten Bedingungen. Da Fahrtenschreiber in der Regel in gesetzlich vorgeschriebenen Fällen eingesetzt werden, liegen besonders hohe Sicherheitsanforderungen vor, das heißt die Verriegelung muß.absolut manipulationssicher sein, um die Beweiskraft der aufgezeichneten Daten sicherzustellen.

Bei dem Einsatz in Fahrzeugen sind erschwerte Umgebungsbedingungen gegeben, bei denen die Verriegelung der Chipkarte zusätzlich noch gegen Schock und Vibrationen ständig sein muß.

Chipkartenaufnahmen sind beispielsweise auch von Bankautomaten bekannt, bei denen die Karte in einen Schlitz des Gerätes eingeführt wird und danach vom Gerät eingezogen wird. Der Einführschlitz wird mit einer Klappe verriegelt, so daß während des Bearbeitungsvorganges, bei dem das Gerät mit dem Chip der Chipkarte kommuniziert, nicht entnommen werden kann. Der Nachteil dieser bekannten Ausführung einer Chipkartenaufnahme besteht darin, daß sie sehr viel Platz benötigt. Dies stellt bei Bankautomaten zwar kein Problem dar, da genügend Platz zur Verfügung steht, bei anderen Anwendungen ist in den Geräten jedoch nur sehr wenig Platz für die Chipkartenaufnahme vorhanden.

Ein erster Schritt zur Reduzierung des Raumbedarfes der Chipkartenaufnahme ist die halbautomatische Ausführung, das heißt die Karte wird manuell eingeführt und verriegelt, während der Auswurf durch das Gerät veranlaßt und ausgeführt wird. Da bei einer solchen halbautomatischen Ausführung ein Benutzer die Chipkarte aufgrund der kompakten Ausgestaltung der Aufnahme noch greifen kann, müssen Verriegelungselemente vorgesehen werden, die eine Entnahme der Chipkarte in der Schreib- und Leseposition verhindern.

Aus dem nächsten Stand der Technik, der Deutschen Offenlegungsschrift DE 198 09 619 A1 ist bereits eine Anordnung zur Aufnahme einer Chipkarte bekannt, welche jedoch keine hinreichende Sicherheit gegen eine Entnahme der Chipkarte während des Lesevorganges bietet.

Aufgabe der Erfindung ist es, eine Chipkartenaufnahme anzugeben, die in der halbautomatischen Betriebsweise arbeitet und bei der sichergestellt ist, daß eine eingeführte und verriegelte Chipkarte nicht durch einen Benutzer entnommen werden kann. Die Chipkartenaufnahme soll dabei sehr platzsparend sein.

Diese Aufgabe wird durch eine Chipkartenaufnahme nach Anspruch 1 gelöst.

Der Vorteil der Erfindung besteht darin, daß durch das Trennen des Zentralteils in ein erstes und ein zweites Zentralteil, die miteinander gekoppelt sind, ein Überhub realisiert werden kann, der vor dem Auswerfen einer Chipkarte zur Durchführung eines Entriegelungsvorganges ausgenutzt wird.

Bei einer Betätigung des ersten Zentralteiles wird zuerst das zweite Zentralteil entriegelt und sodann über das Kupplungselement soweit verschoben, daß die Chipkarte entnommen werden kann.

In einer vorteilhaften Ausführung wird das Kupplungselement durch eine in eine fensterförmige Ausnehmung des zweiten Zentralteiles eingreifende Nase des ersten Zentralteiles gebildet. Das Fenster ist dabei größer als die Nase, so daß das erste Zentralteil, vorzugsweise über einen pfeilförmigen Abschnitt, zunächst das Sperrelement betätigen kann, bevor es das zweite Zentralteil mitnimmt zum Auswerfen der Karte.

In einer bevorzugten Ausführung wird das Sperrelement durch zwei gefederte Querschieber gebildet, die auf den beiden Seiten der pfeilförmigen Kontur des ersten Zentralteiles angeordnet sind. Dabei ist vorteilhaft, daß die Federkräfte am Querschieber lediglich die Kraft auffangen müssen, die bei einer Beschleunigung des ersten Zentralteiles erfolgt. Dieses Teil kann jedoch sehr gut massereduziert ausgelegt werden. Wenn die Querschieber gegenüberliegend angeordnet sind, können Querbeschleunigung die Verriegelung ebenfalls nicht lösen, da hierbei nur ein Schieber aus der Verriegelung schnappen kann. Die Verriegelung des zweiten Zentralteiles erfolgt vorteilhafterweise durch an den Querschiebern befestigte Verriegelungszapfen, die an eine L-förmige Kulisse des zweiten Zentralteiles eingreifen. Dies stellt eine formschlüssige Verriegelung dar, so daß ein schocksicherer Betrieb ermöglicht ist.

Die erfindungsgemäße Chipkartenaufnahme wird besonders vorteilhaft in einem digitalen Fahrtenschreiber eingesetzt, da es dort auf eine besonders kompakte Bauweise und eine besondere Schock- und Vibrationssicherheit ankommt.

Die Erfindung wird nachfolgend anhand von Ausführungsbeispielen näher erläutert. Es zeigt:
- Figur 1: eine Draufsicht auf eine erfindungsgemäße Chipkartenaufnahme in einer ersten Ausführungsform in einer ersten Arbeitsposition,
- Figur 2: eine dreidimensionale Ansicht von unten der Chipkartenaufnahme von Figur 1,
- Figur 3: die Chipkartenaufnahme von Figur 1 in einer Zwischenarbeitsposition,
- Figur 4: einen vergrößerten Ausschnitt des Längsschnitts der Chipkartenaufnahme von Figur 3,
- Figur 5: die Chipkartenaufnahme der Figuren 1 und 3 in einer Endposition,
- Figur 6: eine dreidimensionale Ansicht von unten der Chipkartenaufnahme von Figur 5,
- Figur 7: ein zweites Ausführungsbeispiel einer erfindungsgemäßen Chipkartenaufnahme in einer Draufsicht,
- Figur 8: die Chipkartenaufnahme von Figur 7 in einer dreidimensionalen Ansicht von unten und
- Figur 9: einen vergrößerten Ausschnitt der Chipkartenaufnahme von Figur 7.

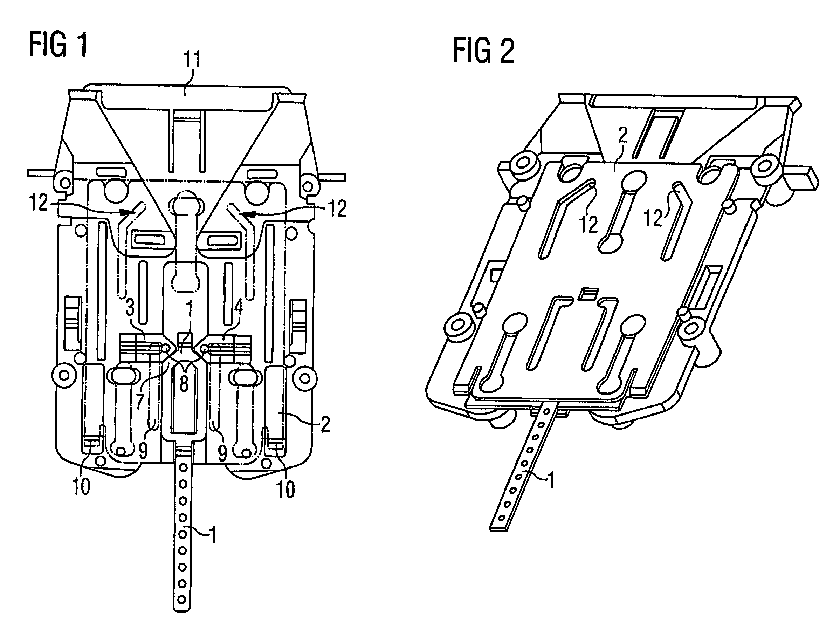

Die Figur 1 zeigt ein erstes Ausführungsbeispiel einer erfindungsgemäßen Chipkartenaufnahme. Die Abmessung der Chipkartenaufnahme sind nur wenig größer als die der Chipkarte 11, die in der Figur 1 in die Chipkartenaufnahme vollständig aufgenommen ist.

Die Chipkartenaufnahme besitzt ein erstes Zentralteil 1, das an seinem einen Ende von einem Antrieb, der nicht dargestellt ist, betätigt werden kann. An dem anderen Ende des ersten Zentralteils 1 ist ein Abschnitt 7 mit einer pfeilförmigen Kontur ausgebildet. Die schrägen Seitenflächen des pfeilförmigen Abschnitts 7 wirken mit Sperrelemente bildenden Querschiebern 3 und 4 zusammen, wobei letztere bei einem Vorschieben des ersten Zentralteils 1 in Querrichtung nach außen bewegt werden. An der Spitze der pfeilförmigen Kontur 7 ist eine Nase 6 vorgesehen, die beispielsweise als abgebogener Blechlappen realisiert sein kann, und die in eine fensterförmige Ausnehmung 5 eines zweiten Zentralteiles 2 eingreift. Die fensterförmige Ausnehmung 5 ist größer als die Nase 6, so daß ein Überhub entsteht, der dazu genutzt wird, zunächst die Querschieber 3 und 4 nach außen zu drücken und sodann das zweite Zentralteil 2 über die Nase 6 mitzunehmen.

Der Überhub ist deswegen vorgesehen, weil in der Ruheposition der Querschieber 3 und 4, in die diese durch eine nicht dargestellte Feder gedrückt werden, das zweite Zentralteil 2 verriegelt ist. Vor dem Auswerfen muß daher die Verriegelung gelöst werden. Die Verriegelung ist durch zwei mit den Querschiebern 3 und 4 verbundenen Verriegelungszapfen 8 realisiert, die in L-förmige Kulissen 9 des zweiten Zentralteils 2 eingreifen. In einer ersten Position, in der die Chipkarte 11 vollständig eingeschoben ist, und das erste Zentralteil 1 noch nicht aus seiner Ruheposition herausbewegt wurde, befinden sich die Verriegelungszapfen 8 in dem kurzen Schenkel des L, der quer zur Auswurfrichtung der Chipkarte bzw. Bewegungsrichtung des ersten Zentralteiles 1 liegt. Das zweite Zentralteil 2, das in der Figur 1 mit gestrichelten Linien dargestellt ist, ist in der Figur 2 von unten zu sehen. Dort sind sowohl die L-förmigen Kulissen zur Realisierung der Verriegelung des Zentralteiles 2 in der ersten Arbeitsposition zu erkennen, als auch zusätzliche Kulissen 12, die zur Zusammenwirkung mit Verriegelungselementen für die Chipkarte 11 vorgesehen sind, in den Figuren aber nicht dargestellt sind.

Es ist sicherzustellen, daß in der ersten Arbeitsposition die Karte 11 nicht manuell entnommen werden kann. Dazu muß die Karte entweder fest verklemmt werden oder es müssen sich Verriegelungselemente in Auswurfrichtung vor die Chipkarten 11 schieben, so daß diese nicht mehr entnommen werden kann. Die Steuerung dieser Verriegelungselemente erfolgt eben über die Kulissen 12, so daß, wenn die Chipkarte 11 ausgeworfen werden soll, die Verriegelung zuvor gelöst werden muß.

Der Entriegelungs- und Auswurfvorgang läuft in der folgenden Reihenfolge ab. Nach der Kartenanforderung an einem Bedienpult läuft das Auswurfgetriebe des Antriebs an. Das erste Zentralteil 1 wird dabei nach vorne geschoben. Aufgrund des Überhubs wird das zweite Zentralteil 2 noch nicht mitgenommen. Der pfeilförmige Abschnitt 7 schiebt die beiden Querschieber 3 und 4 nach rechts bzw. links. Die Verriegelungszapfen, die bisher das zweite Zentralteil 2 gesichert haben, geben dieses nun frei. Ober das durch eine Nase 6 und eine fensterförmige Ausnehmung 5 gebildetes Kupplungselement wird bei einer weiteren Vorwärtsbewegung des ersten Zentralteiles 1 das zweite Zentralteil 2 mitgenommen. Die Größe der fensterförmigen Ausnehmung 5 ergibt sich daraus, wieviel Überhub zur Verfügung stehen muß, um eine Entriegelung des zweiten Zentralteiles 2 zu erreichen, also entsprechend der Ausführung der Querschieber 3 und 4 und der Kulissen 9. Das zweite Zentralteil 2 besitzt Mitnahmeelemente 10, die einen Anschlag für die Chipkarte 11 bilden und über die bei der Auswurfbewegung die Chipkarte 11 mitgenommen wird, um sie aus der Chipkartenaufnahme zu befördern.

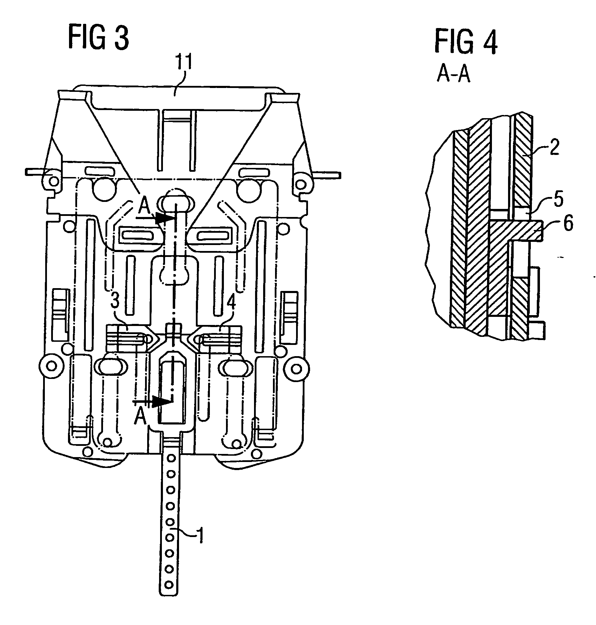

Die Figuren 3 und 4 zeigen die Chipkartenaufnahme in einer Zwischenarbeitsstellung, in der das erste Zentralteil 1 bereits ein wenig nach vorne bewegt wurde, so daß die Querschieber 3 und 4 bereits eine Seitwärtsbewegung erfahren haben. Wie anhand der Position der Verriegelungszapfen 8 in den L-förmigen Kulissen 9 zu erkennen ist, ist die Verriegelung des zweiten Zentralteiles 2 aber noch nicht gelöst. Die Figur 4 zeigt die entsprechende Position der Nase 6 in der fensterförmigen Ausnehmung 5 des Kupplungselementes. Die als Mitnehmer dienende Nase 6 ist noch nicht am Anschlag der fensterförmigen Ausnehmung 5 angelangt, so daß noch keine Kraft von dem ersten Zentralteil 1 auf das zweite Zentralteil 2 übertragen wird.

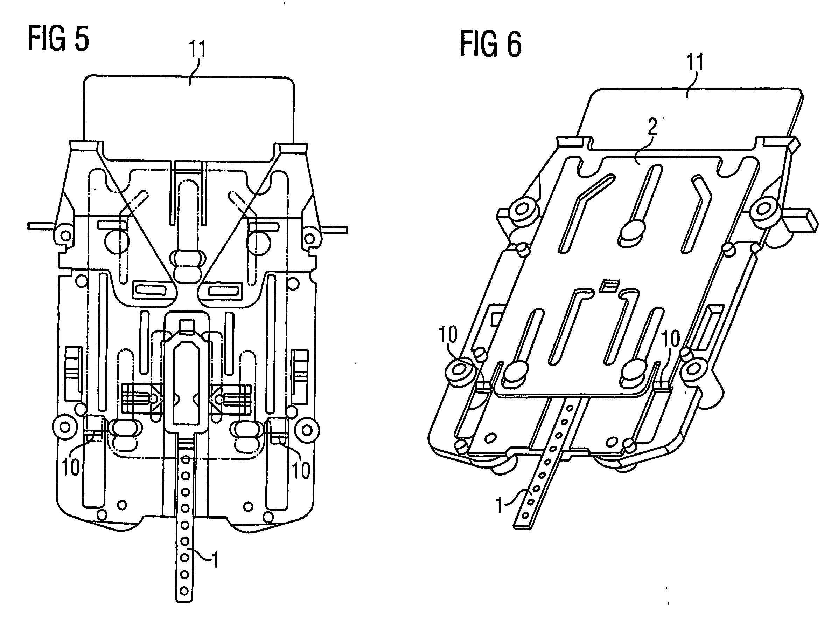

Die Figuren 5 und 6 zeigen die Chipkartenaufnahme des ersten Ausführungsbeispieles in einer Endposition, in der die Chipkarte 11 so weit ausgeschoben ist, daß sie von einem Benutzer manuell entnommen werden kann. Die Figur 6 zeigt dabei die Chipkartenaufnahme von der Unterseite. Nach dem Auswerfen der Chipkarte 11 bleibt das zweite Zentralteil 1 in dieser Position.

Beim Einstecken der Karte läuft folgender Vorgang ab. Die Chipkarte 11 wird eingesteckt und schlägt mit der Stirnseite an die Mitnahmeelemente 10 des zweiten Zentralteils 2 an. Mit Hilfe dieser Mitnahmeelemente 10 wird das zweite Zentralteil 2 nach hinten geschoben und nimmt dabei über die Kupplungselemente 5 und 6 das erste Zentralteil 1 mit. Das zweite Zentralteil 2 wird nun mit der Chipkarte 11 zurückgeschoben, wobei sich über die Kulissensteuerung 12 die nicht dargestellte Verriegelung der Chipkarte 11 schließt. Nahe des Endpunktes rasten die Querschieber'3 und 4 in das zweite Zentralteil 2 ein und arretieren damit die Verriegelung. Das erste Zentralteill ist so weit mitgenommen worden, daß die gefederten Querschieber 3 und 4 auf die pfeilförmige Kontur laufen und aufgrund der Federkraft das erste Zentralteil 1 zusätzlich nach hinten schieben. Damit ist der Einsteckvorgang abgeschlossen und der Datenaustausch zwischen der Chipkarte 11 und dem Gerät, zu dem die Chipkartenaufnahme gehört, kann begonnen werden.

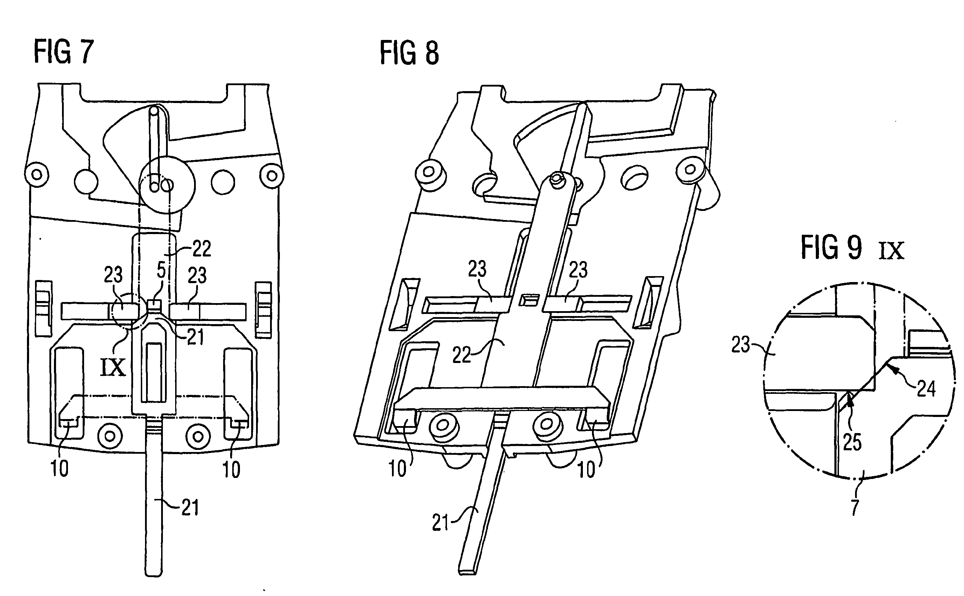

Die Figuren 7 bis 9 zeigen ein zweites Ausführungsbeispiel einer erfindungsgemäßen Chipkartenaufnahme. Ein erstes Zentralteil 21 ist im wesentlichen gleich aufgebaut wie das Zentralteil 1 des ersten Ausführungsbeispieles. Das zweite Zentralteil 22 des zweiten Ausführungsbeispieles ist dagegen im wesentlichen T-förmig. Der Querbalken des T ist dafür vorgesehen, an seinen Enden die Mitnahmeelemente 10 zu tragen, die zum Auswerfen der Chipkarte erforderlich sind, bzw. zum Rückschieben des zweiten Zentralteils 22 beim Einschieben der Chipkarte 11. Die Verriegelung des zweiten Zentralteiles 22. erfolgt nicht wie im ersten Ausführungsbeispiel über Verriegelungszapfen und L-förmige Kulissen, sondern das zweite Zentralteil 22 besitzt als Sperrelement eine Anschlagfläche 25, die parallel zu einem Querschieber 23 verläuft, so daß eine Bewegung des zweiten Zentralteiles 22 blockiert ist. Das erste Zentralteil 21 besitzt wiederum einen Abschnitt mit einer pfeilförmigen Kontur, über deren Seitenflächen 24 die die Querschieber 23 so weit zurückgeschoben werden, daß die Anschlagflächen 25 nicht mehr mit den Querschiebern 23 in Kontakt sind und somit eine Vorwärtsbewegung des zweiten Zentralteiles 22 ermöglicht ist.

Die übrigen Bewegungsvorgänge entsprechen denen des ersten Ausführungsbeispieles der Figuren 1 bis 6.

## Patentansprüche

1. Chipkartenaufnahme mit
- einem ersten Zentralteil (1; 21), das über einen Antrieb verschoben werden kann, und
- einem zweiten Zentralteil (2; 22), das Mitnahmeelemente (10) aufweist, die einen Anschlag für eine Chipkarte (11) bilden und über die bei einer Auswurfbewegung die Chipkarte (11) mitgenommen wird, um sie ausgehend von einer ersten Arbeitsposition, in der eine Chipkarte vollständig aufgenommen ist, aus der Chipkartenaufnahme zu befördern,
**dadurch gekennzeichnet, daß**
- ein Sperrelement (3, 4; 23) vorgesehen ist, durch das eine Verschiebung des zweiten Zentralteiles (2; 22) in der ersten Arbeitsposition verhindert ist und das durch das erste Zentralteil (1: 21) derart betätigbar ist, daß die Verriegelung in einer zweiten Arbeitsposition bei ebenfalls vollständig aufgenommener Chipkarte aufgehoben ist, und
- die beiden Zentralteile (1, 2; 21, 22) sich über ein Kupplungselement (5, 6) in der zweiten Arbeitsposition gegenseitig mitnehmen können, wobei für die Auswurfbewegung das zweite Zentralteil (2; 22) durch das erste Zentralteil (1; 21) mitgenommen wird.

2. Chipkartenaufnahme nach Anspruch 1,
**dadurch gekennzeichnet, daß**
das Kupplungselement durch eine in eine fensterförmige Ausnehmung (5) des zweiten Zentralteils (2; 22) eingreifende Nase (6) des ersten Zentralteiles (1; 21) gebildet ist.

3. Chipkartenaufnahme nach Anspruch 1 oder 2,
**dadurch gekennzeichnet, daß**
das erste Zentralteil (1; 21) einen Abschnitt (7) mit einer pfeilförmigen Kontur aufweist, durch den das Sperrelement (3, 4; 23) betätigbar ist.

4. Chipkartenaufnahme nach einem der Ansprüche 1 bis 3,
**dadurch gekennzeichnet, daß**
das Sperrelement durch zwei gefederte, auf den Seiten des pfeilförmigen Abschnitts (7) gegenüberliegende Querschieber (3, 4) gebildet ist mit Verriegelungszapfen (8), die jeweils in eine L-förmige Kulisse (9) des zweiten Zentralteils (2) eingreifen.

5. Verwendung der Chipkartenaufnahme nach einem der Ansprüche 1 bis 4 in einem digitalen Fahrtenschreiber.

## Claims

1. Smart card holder having
- a first central part (1; 21) which can be moved by means of a drive, and
- a second central part (2; 22) which has drive elements (10) which form a stop for a smart card (11) and by means of which the smart card (11) is driven during an ejection movement, in order to move said card out of the smart card holder, starting from a first operating position in which the smart card is fully held,
**characterized in that**
- a blocking element (3, 4; 23) is provided which prevents the second central part (2; 22) moving in the first operating position and which can be operated by the first central part (1; 21) in such a way that locking is cancelled in a second operating position when the smart card is likewise fully held, and
- the two central parts (1, 2; 21, 22) can drive one another in the second operating position by means of a coupling element (5, 6), wherein the second central part (2; 22) is driven by the first central part (1; 21) for the ejection movement.

2. Smart card holder according to Claim 1,
**characterized in that** the coupling element is formed by a lug (6) on the first central part (1; 21), which lug engages in a window-like recess (5) in the second central part (2; 22).

3. Smart card holder according to Claim 1 or 2,
**characterized in that** the first central part (1; 21) has a section (7) which has an arrow-like contour and can operate the blocking element (3, 4; 23).

4. Smart card holder according to one of Claims 1 to 3,
**characterized in that** the blocking element is formed by two sprung cross-slides (3, 4) which are situated opposite one another on the sides of the arrow-like section (7) and have locking pins (8) which each engage in an L-shaped track (9) on the second central part (2).

5. Use of the smart card holder according to one of Claims 1 to 4 in a digital tachograph.

## Revendications

1. Logement pour carte à puce comportant
- une première pièce centrale (1; 21), qui peut être déplacée par un entraînement, et
- une deuxième pièce centrale (2; 22), qui a des éléments entraîneurs (10) formant une butée pour une carte à puce (11) et par l'intermédiaire desquels la carte à puce (11) peut être entraînée, lors d'un mouvement d'éjection, pour la sortir, à partir d'une première position de travail, dans laquelle une carte à puce est entièrement introduite, du logement pour carte à puce,
**caractérisé par le fait**
- **qu'**il est prévu un élément de blocage (3, 4; 23) qui empêche, dans la première position de travail, un déplacement de la deuxième pièce centrale (2; 22) et qui peut être actionné par la première pièce centrale (1; 21) de telle sorte que, dans une deuxième position de travail, le verrouillage est supprimé, alors que la carte à puce est également entièrement introduite, et
- **que** les deux pièces centrales (1, 2; 21, 22) peuvent, par l'intermédiaire d'un élément de couplage (5, 6), s'entraîner réciproquement dans la deuxième position de travail, la deuxième pièce centrale (2; 22) étant entraînée par la première pièce centrale (1; 21) pour le mouvement d'éjection.

2. Logement pour carte à puce selon la revendication 1
**caractérisé par le fait**
- **que** l'élément de couplage est formé par un talon (6) faisant partie de la première pièce centrale (1; 21) et qui s'engage dans un évidement (5) en forme de fenêtre de la deuxième pièce centrale (2; 22).

3. Logement pour carte à puce selon la revendication 1 ou 2
**caractérisé par le fait**
**que** la première pièce centrale (1; 21) comporte une section (7) ayant un contour en forme de flèche, par l'intermédiaire duquel l'élément de blocage (3, 4; 23) peut être manoeuvré.

4. Logement pour carte à puce selon l'une des revendications 1 à 3
**caractérisé par le fait**
**que** l'élément de blocage est formé par deux coulisseaux transversaux (3, 4) à ressort se trouvant l'un en face de l'autre de chaque côté de la section (7) en forme de flèche et ayant chacun un tourillon de verrouillage (8) qui s'engage dans une coulisse (9) en forme de L de la deuxième pièce centrale (2).

5. Utilisation dans un tachygraphe numérique du logement pour carte à puce selon l'une des revendications 1 à 4.
